## Europäisches Patentamt
## European Patent Office
## Office européen des brevets

(19)

(11) Numéro de publication: **0 009 453**
**B1**

(12)
# FASCICULE DE BREVET EUROPEEN

(45) Date de publication du fascicule de brevet: **25.11.81**

(51) Int. Cl.³: **G 21 C 17/00,**
**G 01 B 11/00**

(21) Numéro de dépôt: **79400663.5**

(22) Date de dépôt: **19.09.79**

(54) **Procédé de contrôle de la dimension et de la position des composants d'une cuve de réacteur nucléaire.**

(30) Priorité: **22.09.78 FR 7827259**

(43) Date de publication de la demande:
**02.04.80 Bulletin 80/7**

(45) Mention de la délivrance du brevet:
**25.11.81 Bulletin 81/47**

(84) Etats Contractants Désignés:
**BE DE GB IT NL SE**

(73) Titulaire: **Framatome**
**Tour Fiat 1 place de la Coupole**
**F-92400 Courbevoie (FR)**

(72) Inventeur: **Commeau, Alain**
**15 rue des Genêts**
**Torcy F-71210 Montchanin (FR)**
Inventeur: **Guignard, Paul**
**16 rue Abbé Perrot**
**F-71200 Le Creusot (FR)**

(74) Mandataire: **Bouget, Lucien et al,**
**CREUSOT-LOIRE 15 rue Pasquier**
**F-75383 Paris Cedex 08 (FR)**

(56) Documents cités:
**FR - A - 1 545 303**
**FR - A - 2 330 997**
**FR - A - 2 259 419**

**FEINWERKTECHNIK & MESSTECHNIK Vol. 85,**
**août/sept. 1977, n° 6,**
**T. M. HOFFER et al. "Abnahme von**
**Werkzeugmaschinen mit einem Laser-**
**messsystem", Teil I. pages 229—284**

**FEINWERKTECHNIK & MESSTECHNIK, Vol. 86,**
**1978, n° 2, pages 76—79**
**T. PFEIFER et al. "Mehrdimensionale**
**Präzionswegmessungen mit einem modularen**
**Laser-Wegmessystem",**

**JOURNAL OF ELECTRONIC ENGINEERING**
**(I.E.E.) n° 111, mars 1976 pages 35, 36**
**"IC Pattern Printing Techniques Improving".**

**VDI—Z, vol. 120, n° 1/2, jan. 1978, pages**
**21—30**
**M. BAMBACH et al. "Betrachtungen zur**
**Ermittlung der Positionsunsicherheit von**
**Werkzeugmaschinen mittels Laser-**
**Interferometer".**

Courier Press, Leamington Spa, England.

## Procédé de contrôle de la dimension et de la position des composants d'une cuve de réacteur nucléaire

L'invention concerne un procédé de contrôle de la dimension et de la position des composants d'une cuve de réacteur nucléaire après assemblage de cette cuve et soudage et usinage des composants dans la cuve en position horizontale.

Une cuve de réacteur nucléaire est généralement constituée de viroles et brides obtenues par forgeage à chaud et de fonds sphèriques obtenus par emboutissage.

Après ébauchage et traitement thermique, ces différentes pièces sont usinées, revêtues d'acier inoxydable, assemblées puis détensionnées après soudage.

L'assemblage des différents éléments constitutifs de la cuve nucléaire s'effectue par la constitution, dans un premier temps, de deux sous-ensembles et par l'assemblage, dans un deuxième temps, de ces deux sous-ensembles pour réaliser la cuve.

La premier de ces deux sous-ensembles, ou sous-ensemble inférieur, comporte le fond de la cuve, la zone de raccordement du fond et des viroles, et les deux viroles qui entourent le coeur dans lequel est disposé le combustible nucléaire. Avant l'assemblage de ce sous-ensemble, les tubes d'instrumentation traversant le fond ont été placés et soudés dans des ouvertures pratiquées dans ce fond et les pieds-supports ont été fixés sur la zone de raccordement entre le fond et les viroles, ou sur la première virole de coeur, en fonction du type de cuve.

Le sous-ensemble supérieur comporte la virole porte-tubulures et la bride de cuve permettant l'assemblage entre la cuve et le couvercle. Cette bride de cuve est partiellement usinée au moment de l'assemblage du sous-ensemble supérieur.

On assemble alors les deux sous-ensembles par exécution d'une soudure circulaire et l'on effectue des usinages supplémentaires (bride de cuve, clavettes de guidage des équipements internes du réacteur et finition des trous de goujons pour la fixation du couvercle de la cuve).

Une fois toutes ces opérations réalisées, étant donnée la multiplicité des opérations successives pour le montage complet de la cuve, il est nécessaire d'opérer un contrôle de dimension et de position des divers composants de la cuve.

En particulier, il est nécessaire de vérifier attentivement les éléments qui sont destinés à être raccordés aux éléments venant se placer dans la cuve. C'est ainsi qu'il faut vérifier les ajutages des tubulures de sortie qui seront liés aux ajutages des équipements internes, le plan de pose des équipements internes, le plan de joint et les rainures de clavettes qui servent au guidage du couvercle et des éléments internes, les supports-glissières intérieurs du fond de cuve et les trous de passage des tubes d'instrumentation servant de guide à l'instrumentation du système de mesure neutronique.

Il faut donc contrôler l'exécution des usinages portant sur ces éléments car de la bonne exécution de ces usinages dépendent la mise en place, le supportage et le positionnement des structures internes dans lesquelles seront inserrés les assemblages d'éléments combustibles constituant le coeur du réacteur.

Les différentes opérations d'usinage sur les éléments énumérés ci-dessus sont effectuées lorsque la cuve est en position horizontale, soit sur des dispositifs vireurs, soit sur des machines-outils.

Par contre, les contrôles dimensionnels et plus particulièrement le contrôle de position des conduits de passage de l'instrumentation de mesure neutronique sont effectués lorsque la cuve est placée en position verticale dans le stand d'épreuve hydraulique. En effet, l'outillage actuellement utilisé nécessite obligatoirement une disposition verticale de la cuve.

D'autre part ce matériel de mesure qui comporte principalement des fils plombés, des broches micrométriques et des niveaux à cadre suppose pour sa manipulation un personnel nombreux.

En outre, la nécessité d'effectuer ces essais lorsque la cuve est dans le stand d'épreuve hydraulique augmente le nombre de manutentions de la cuve et provoque un encombrement du stand. D'autre part, le fait que la cuve soit en position verticale lors de ces contrôles crée de mauvaises conditions de travail pour le personnel qui opère à l'intérieur de la cuve.

Enfin les gradients de température entre la base et le sommet de la cuve sont importants, si bien qu'on doit tenir compte de ces gradients de température dans la comparaison des mesures effectuées avec les cotes prévues par le plan de construction.

Cependant, les contrôles de coordonnées effectués sur la cuve ne nécessitent pas tous un appareillage aussi compliqué et des opérations aussi longues.

C'est ainsi que le contrôle des cotes verticales ou contrôle d'altitude des différents éléments de la cuve est plus simple à réaliser lorsque la cuve est en position verticale que les contrôles de coordonnées suivant deux directions d'un plan de section droite, c'est-à-dire d'un plan perpendiculaire à l'axe de la cuve.

Ce sont donc principalement ces contrôles dans un plan de section droite qui nécessitent la mise en oeuvre d'appareillages complexes par des opérateurs nombreux.

On connait par ailleurs (brevet français 1.545.303) un dispositif pour la mesure et le contrôle des dimensions d'objets dans les trois dimensions x, y, z. Ce dispositif comporte deux appareils semblables dont l'un est utilisé pour mesurer et contrôler les dimensions d'objets dans le plan x—y et l'autre dans le plan y—z. Chacun des appareils de mesure comporte une lunette de visée mobile dans deux directions perpendiculaires, un système de mesure de déplacement dans chacune des directions de déplacement de la lunette de visée et un moyen de comptage et d'affichage fournissant les dimensions des objets dans les deux directions.

On connait également, comme décrit dans un article de VON T PFEIFER, R. VIECHERN et E. TRAPET, dans la revue FEINWERKTECHNIK & MESSTECHNIK, volume 86, 1978, n° 2 pages 76—79, un dispositif utilisant la méthode interférométrique par la détermination de contours et comportant une source de rayonnement laser, un diviseur de faisceau, deux interféromètres, deux réflecteurs et deux photocapteurs par la mesure suivant deux axes de coordonnées.

On n'a cependant jamais pensé à mettre en oeuvre de tels dispositifs pour contrôler les dimensions et la position des éléments d'une cuve de réacteur nucléaire conditionnant la mise en place des structures internes du réacteur.

Le but de l'invention est donc de proposer un procédé de contrôle des dimensions et de la position dans un plan de section droite, c'est-à-dire perpendiculaire à l'axe de la cuve, des éléments d'une cuve de réacteur nucléaire conditionnant la mise en place des structures internes du réacteur, après assemblage de la cuve et usinage des éléments, par comparaison de coordonnées réelles mesurées avec les coordonnées théoriques prévues par le plan de construction, procédé qui permet d'opérer de façon rapide et précise, de façon à corriger immédiatement les défauts de positionnement, dans le cas des éléments où cette rectification est possible.

Dans ce but, on maintient la cuve en position horizontale pendant les opérations de contrôle, on déplace un instrument de visée optique monté sur un support permettant le déplacement de l'instrument de visée par rapport à la cuve dans deux directions perpendiculaires à l'axe de la cuve, jusqu'à une position dé référence définie par la visée d'un point repéré par rapport à la cuve, on dispose une mire par rapport à l'élément de la cuve à contrôler de façon à faire coïncider cette mire avec le point dont on vérifie les coordonnées, on déplace l'instrument de visée depuis sa position de référence jusqu'à obtenir la visée exacte de la mire, on enregistre de façon très précise les déplacements suivant chacune des directions de déplacement de l'instrument de visée pour l'amener depuis la position de référence jusqu'à la position de visée de la mire, pour obtenir les coordonnées du point de visée suivant chacun des axes de déplacement et l'on compare ces coordonnées aux coordonnées théoriques du plan de construction.

On va maintenant décrire en se reportant aux figures jointes en annexe un mode de réalisation du procédé suivant l'invention et un dispositif permettant sa mise en oeuvre.

La figure 1 représente dans une vue en élévation avec coupe partielle une cuve de réacteur nucléaire après assemblage, en position horizontale sur des supports et le dispositif de contrôle dimensionnel.

La figure 2 représente la même cuve et le dispositif de contrôle dimensionnel dans une vue de dessus, avec coupe partielle de la cuve.

La figure 3 représente une vue suivant A de la figure 2.

La figure 4 est une vue en perspective du dispositif de contrôle dimensionnel permettant la mise en oeuvre du procédé suivant l'invention.

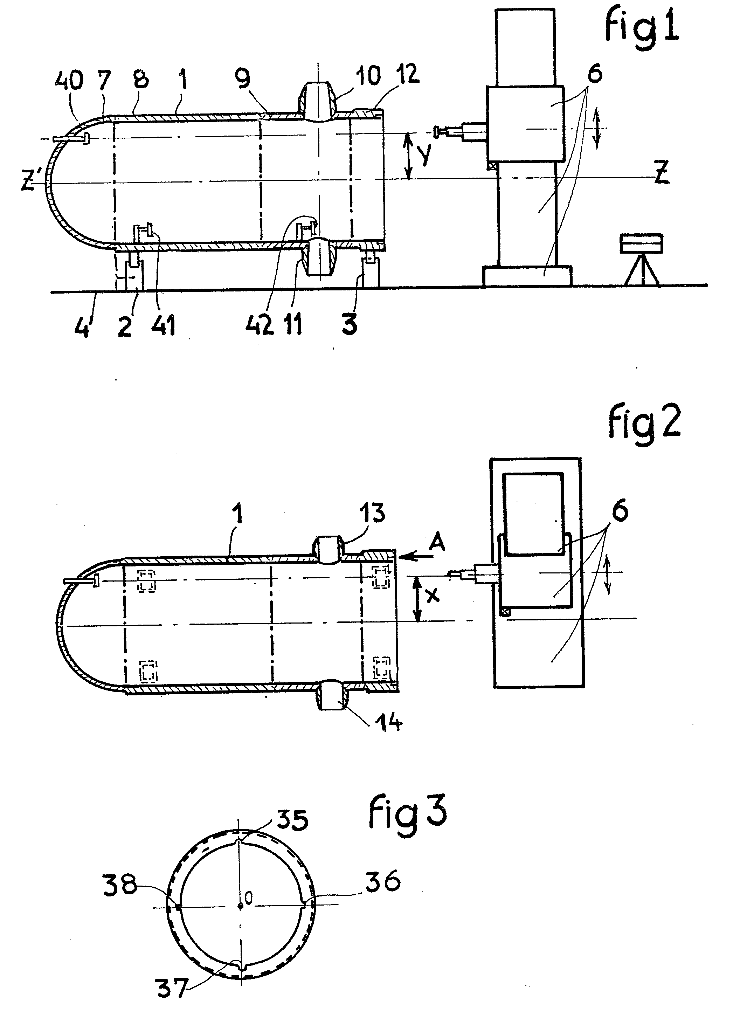

Sur la figure 1, on voit une cuve de réacteur nucléaire 1 assemblée et disposée horizontalement sur des supports 2 et 3 en forme de V fixés sur la marche 4 d'une machine-outil, par exemple une fraiseuse-alèseuse dont le bâti 6 constitue le support du dispositif de contrôle dimensionnel destiné à la mise en oeuvre du procédé suivant l'invention.

La cuve 1 comporte un fond hémisphèrique 7 et un ensemble de viroles 8 constituant le sous-ensemble inférieur de la cuve ainsi qu'une virole 9 portant les tubulures telles que 10, 11, 13, 14, et la bride de cuve 12 à l'intérieur de laquelle sont usinées les rainures de clavettes pour le guidage des internes, ces éléments étant visibles aux figures 1, 2 et 3.

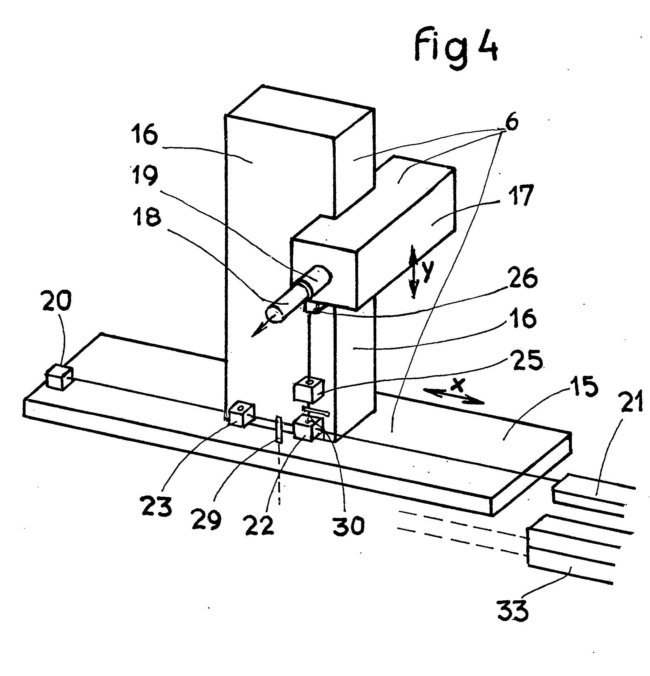

On va maintenant se reporter à la figure 4 pour décrire plus en détail le dispositif de contrôle dimensionnel supporté par le bâti de la fraiseuse-alèseuse 6.

Le bâti de la fraiseuse-alèseuse 6 comporte un banc 15, un montant 16 monté sur des glissières du banc 15 de façon à permettre un déplacement du montant 16 dans la direction X et un chariot 17 monté sur des glissières du montant 16 de façon à permettre un déplacement du chariot 17 dans la direction Y.

Les directions X et Y correspondent à deux directions perpendiculaires d'un plan de section droite perpendiculaire à l'axe ZZ' de la cuve.

Un télescope 18 utilisé comme instrument de visée est fixé sur la broche 19 du chariot 17 de façon que son axe optique soit dirigé parallèlement à l'axe de la cuve.

La banc de la machine-outil porte d'autre part un réflecteur optique 20 disposé sur le trajet d'un faisceau laser issu d'une source 21 disposée sur le marbre de la fraiseuse-alèseuse de façon que le faisceau laser ait approximativement la direction X.

Le montant 16 de la machine-outil porte d'autre part un séparateur de faisceaux 22 et un interféromètre 23 disposés sur le trajet du faisceau laser issu de la source 21. Le séparateur de faisceaux 22 permet la séparation des rayonnements lasers en deux faisceaux à directions perpendiculaires dont l'un se trouve dans le prolongement du faisceau incident et traverse l'interféromètre 23 pour venir frapper le réflecteur 20 fixé sur le banc de la machine-outil et dont l'autre est envoyé perpendiculairement et vers le haut suivant la verticale.

Sur le trajet de ce faisceau dirigé vers le haut suivant la verticale est disposé un interféromètre 25 fixé sur le montant de la machine-outil. Ce faisceau vient ensuite frapper un réflecteur 26 porté par le chariot de la machine-outil mobile suivant la direction Y sur le montant de cette machine.

Les faisceaux réfléchis par les réflecteurs 20 et 26 sont renvoyés sur les interféromètres 23 et 25 respectivement, ce qui permet la production de franges d'interférences avec le rayonnement incident, ces franges d'interférence dépendant de la position relative du réflecteur et de l'interféromètre.

Un comptage des franges d'interférence grâce aux capteurs 29 et 30 disposés respectivement sur le trajet des faisceaux réfléchis par les réflecteurs 20 et 26, ces capteurs étant reliés à un dispositif électronique de comptage, permet une mesure très précise des déplacements du montant et du chariot de la machine-outil.

Le résultat de cette mesure est affiché automatiquement sur un dispositif d'affichage 33 disposé sur le marbre de la machine-outil. Ainsi l'opérateur dispose des mesures correspondant aux déplacements du chariot et du montant de la machine-outil.

Le dispositif électronique de comptage associé aux capteurs 29 et 30 permet un comptage des franges d'interférence pour un sens de déplacement du chariot et du montant et un décomptage de ces franges pour le déplacement dans le sens inverse du chariot et du montant.

On va décrire une opération de contrôle dimensionnel en utilisant le dispositif représenté à la figure 4 dans le cas d'une cuve de réacteur nucléaire disposée sur le marbre de la machine-outil comme représenté aux figures 1, 2 et 3.

On dispose dans un premier temps des mires en concordance avec les axes des rainures de clavettes 35, 36, 37 et 38 visibles à la figure 3 et l'on vise successivement ces quatre mires avec le télescope d'alignement 18 dont on a réglé la visée à distance minimale sur la face avant de la cuve.

On a ainsi matérialisé deux axes de référence joignant le centre des rainures 35 et 37 et 36 et 38 respectivement. A l'intersection de ces axes de référence, le point O correspondant sensiblement à la trace de l'axe de la cuve sur le plan de la face avant est alors choisi comme point de visée pour déterminer la position initiale de la lunette de visée.

On dispose alors des mires sur les éléments dont on veut contrôler la dimension et la position, de telle sorte que ces mires soient en concordance avec les points dont on veut vérifier les coordonnées.

On dispose par exemple des mires telles que la mire 40 visible à la figure 1 sur l'embout des tubes de traversée de l'instrumentation en fond de cuve et des mires à 90° telles que 41 et 42 pour la vérification des tubulures et des supports-guides.

On effectue alors un déplacement du télescope d'alignement 18 depuis la position initiale définie par l'intersection des axes de clavettes jusqu'à la position de visée exacte de la mire en concordance avec le point dont on veut déterminer les coordonnées réelles.

Pour effectuer ce déplacement on est amené à déplacer le montant de la machine-outil suivant la direction X et le chariot de cette machine suivant la direction Y. Pour chacun de ces déplacements suivant X et Y jusqu'à la visée exacte de la mire en position sur le point donton vérifie les coordonnées, un comptage ou un décomptage de franges d'interférence est opéré au niveau des capteurs 29 et 30 et les dispositifs électroniques de comptage qui leur sont associés. On obtient donc un affichage automatique sur le dispositif 33 des coordonnées X et Y du point sur lequel on effectue le contrôle.

Il suffit alors de faire une comparaison avec les coordonnées théoriques du plan de construction pour connaître l'écart existant, après toutes les opérations de montage et d'usinage de la cuve, entre la position réelle du point et la position théorique.

Dans le cas des tubes de traversée de l'instrumentation il est possible, si un opérateur se tient en fond de cuve, de rectifier la position des tubes pour la rendre conforme à la position théorique. Un opérateur disposé à l'extérieur de la cuve ou voisinage du dispositif 33 peut donner les indications à l'opérateur disposé en fond de cuve pour effectuer la correction de position voulue.

Le procédé suivant l'invention utilisant le dispositif pour sa mise en oeuvre qui vient d'être décrit permet donc d'obtenir très rapidement toutes les données nécessaires sur les positions réelles des éléments de la cuve conditionnant la mise en place des structures internes de la cuve du réacteur nucléaire et dans certains cas de rectifier les positions de certains éléments tels que les tubes-guides de l'instrumentation en fond de cuve.

On voit que le procédé suivant l'invention utilisant le dispositif ci-dessus mentionné permet d'opérer très rapidement sur la cuve en position horizontale sans la mise en place sur cette cuve d'une instrumentation complexe et sans l'intervention de nombreux opérateurs.

Il est bien évident que le dispositif de mise en oeuvre du procédé qui vient d'être décrit n'est pas limitatif et qu'on peut modifier des points de détail sans pour autant sortir du cadre de l'invention. C'est ainsi que dans le cadre de l'exemple qui vient d'être décrit, les mesures de déplacement sont réalisées par interférométrie mais on peut imaginer des dispositifs de mesure de déplacement différents pourvu qu'ils donnent une précision suffisante dans la détermination des mesures avec ou sans affichage direct du résultat.

On peut imaginer tout dispositif de mesure de déplacement mécanique optique, électrique ou électronique.

On peut utiliser tout type de lunette de visée permettant une mise au point pour les distances utilisées.

Dans l'exemple qui vient d'être décrit, le support de l'instrument de visée est constitué par le bâti d'une fraiseuse-alèseuse sur le marbre de laquelle on venait placer la cuve de réacteur nucléaire sur des supports en V, mais il est bien évident qu'on peut choisir un support d'un autre type. Par exemple, on peut imaginer un support qu'on viendra fixer de façon amovible sur la face avant de la cuve en position horizontale, ce support comportant des glissières pour le déplacement dans la direction horizontale d'un support intermédiaire comportant lui-même des glissières verticales pour le déplacement d'un chariott portant la lunette de visée.

Enfin le procédé suivant l'invention et le dispositif pour sa mise en oeuvre sont utilisables non seulement pour le contrôle dimensionnel des éléments de la cuve dont il a été question mais également de tout autre élément de cette cuve dont la position et la dimension seraient critiques pour la mise en place des structures internes du réacteur nucléaire.

Il est bien évident également que dans la mise en oeuvre du procédé, on peut tenir compte des gradients de température dans la direction verticale, ces différences de température dans la direction verticale étant cependant moins importantes que dans le cas de contrôle sur la cuve en position verticale, pour la comparaison des coordonnées réelles mesurées avec les coordonnées théoriques relevées sur le plan de construction.

**Revendications**

1. Procédé de contrôle des dimensions et de la position dans un plan de section droite, c'est-à-dire perpendiculaire à l'axe de la cuve, des éléments d'une cuve de réacteur nucléaire conditionnant la mise en place des structures internes du réacteur, après assemblage de la cuve et usinage des éléments, par comparaison de coordonnées réelles mesurées avec les coordonnées théoriques prévues par le plan de construction, caractérisé par le fait:
— qu'on maintient la cuve (1) en position horizontale pendant les opérations de contrôle,
— qu'on déplace un instrument de visée (18) monté sur un support (6) permettant le déplacement de l'instrument de visée (18) par rapport à la cuve dans deux directions perpendiculaires à l'axe de la cuve (1), jusqu'à une position de référence définie par la visée d'un point (O) reprréré par rapport à la cuve,
— qu'on dispose une mire (40) par rapport à l'élément de la cuve (1) à contrôler de façon à faire coïncider cette mire (40) avec le point dont on vérifie les coordonnées,
— qu'on déplace l'instrument de visée (18) depuis sa position de référence jusqu'à obtenir la visée exacte de la mire (40),
— qu'on enregistre de façon très précise les déplacements suivant chacune des directions de déplacement de l'instrument de visée (18) pour l'amener depuis la position de références jusqu'à la position de visée de la mire (40), pour obtenir les coordonnées du point de visée, suivant chacun des axes de déplacement,
— enfin qu'on compare ces coordonnées aux coordonnées théoriques du plan de construction.

2. Procédé de contrôle suivant la revendication 1, caractérisé par le fait que la mesure de déplacement suivant chacune des directions de l'instrument de visée (18) se fait par méthode interférométrique.

3. Procédé de contrôle suivant l'une quelconque des revendications 1, et 2, caractérisé par le fait que la position de référence de l'instruments de visée optique (18) est définie par la visée du point (O) d'intersection des axes joignant la partie médiane des rainures de clavettes (35-36-37-38) usinées dans la bride de cuve (12).

**Claims**

1. Method of checking the dimensions and the position in a cross-sectional plane, i.e. a plane perpendicular to the axis of the vessel, of the elements of a nuclear reactor vessel conditioning the positioning of the internal structure of the reactor, after assembly of the vessel and machining of the elements, by comparing actual measured coordinates with the theoretical coordinates provided by the working drawing, characterised by the fact that:
— the vessel (1) is kept in a horizontal position during checking operations,
— a sighting instrument (18) mounted on a support (6), allowing displacement of the sighting instrument (18) with respect to the vessel in two directions perpendicular to the axis of the vessel (1) is displaced as far as a reference position defined by the sighting of a point (O) established in relation to the vessel,
— a sighting mark (40) is disposed in relation to the element of the vessel (1) to be checked so as to make this sighting mark (40) coincide with the point whose coordinates are being checked,
— the sighting instrument (18) is displaced from its reference position until accurate sighting of the sighting mark (40) is obtained,
— the displacements in each of the directions of displacement of the sighting instrument (18) to bring it from the reference position to the position for sighting the sighting mark (40) are very accurately recorded to obtain the coordinates of the sighting point along each axis of displacement,

— lastly, these coordinates are compared with the theoretical coordinates of the working drawing.

2. Checking method according to claim 1, characterised by the fact that the displacement measurement along each of the directions of the sighting instrument (18) is made by the interferometric method.

3. Checking method according to either of claims 1 and 2, characterised by the fact that the reference position of the optical sighting instrument (18) is defined by sighting the point (O) of intersection of the axes joining the median part of the key-grooves (35-36-37-38) machined in the vessel flange (12).

**Patentansprüche**

1. Verfahren zur Prüfung der Abmessungen und der Lage in einer Querschnittsebene, d. h. senkrecht zur Reaktorbehälterachse, der Bauteile eines Kernreaktorbehälters, die die Montage der inneren Reaktorbauteile bedingen, nach Zusammenbau des Behälters und Bearbeitung der Bauteile, durch Vergleich der gemessenen Istkoordinaten mit den in der Konstruktionszeichnung vorgesehenen, theoretischen Koordinaten, dadurch gekennzeichnet,

— dass der Behälter (1) während den Prüfgängen in waagerechter Lage gehalten wird,

— dass die Visiervorrichtung (18), die auf einer Auflage (6) angeordnet ist, dank der sie (18) im Verhältnis zum Reaktorbehälter in zwei zur Achse des Behälters (1) senkrechten Richtungen bewegt werden kann, bis zu einer Bezugsstellung bewegt wird, die durch die Visur eines im Verhältnis zum Behälter gekennzeichneten Punkts (O) bestimmt ist,

— dass eine Messlatte (40) im Verhältnis zu dem zu prüfenden Teil des Behälters (1) so angeordnet wird, dass diese Messlatte (40) mit dem Punkt zusammenfällt, dessen Koordinaten geprüft, werden,

— dass die Visiervorrichtung (18) von ihrer Bezugsstellung ausgehend so lange bewegt wird, bis man die genaue Visur der Messlatte (40) erzielt,

— dass die Bewegungen der Visiervorrichtung (18) nach den jeweiligen Bewegungsrichtungen, um sie von der Bezugsstellung ausgehend bis in die Visierstellung der Messlatte (40) zu bringen, ganz genau aufgezeichnet werden, um die Koordinaten des Visierpunkts nach der jeweiligen Bewegungsachse zu erzielen,

— dass schliesslich diese Koordinaten mit den theoretischen Koordinaten in der Konstruktionszeichnung verglichen werden.

2. Prüfverfahren nach Anspruch 1 dadurch gekennzeichnet, dass die Messung der Bewegung nach der jeweiligen Bewegungsrichtung der Visiervorrichtung (18) nach einem Interferenzmessverfahren erfolgt.

3. Prüfverfahren nach einem der Ansprüche 1 und 2 dadurch gekennzeichnet, dass die Bezugsstellung der optischen Visiervorrichtung (18) durch die Visur des Schnittpunkts (O) der Achsen bestimmt wird, die sich mit dem Mittelteil der im Behälterflansch (12) bearbeiteten Keilnuten (35-36-37-38) vereinigen.

0 009 453

fig 1

fig 2

fig 3

1

# Fig 4